(19)

Europäisches
Patentamt
European
Patent Office
Office européen
des brevets

(11)  **EP 2 765 518 B1**

(12)  **EUROPEAN PATENT SPECIFICATION**

(45) Date of publication and mention
of the grant of the patent:
**09.12.2015  Bulletin 2015/50**

(51) Int Cl.:
***G06Q 10/10*** *(2012.01)*   ***G06Q 10/06*** *(2012.01)*
***G06F 11/36*** *(2006.01)*

(21) Application number: **14153935.3**

(22) Date of filing: **05.02.2014**

(54) **Test scheduling**

Testplanung

Planification de test

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2013  US 201313762067**

(43) Date of publication of application:
**13.08.2014  Bulletin 2014/33**

(73) Proprietor: **FORD MOTOR COMPANY
Dearborn, MI 48126 (US)**

(72) Inventors:
  • **Reich, Daniel
    Royal Oak, MI 48067 (US)**

  • **Klampfl, Erica
    Canton, MI 48188 (US)**
  • **Barnes, Ellen
    Troy, MI 48085 (US)**
  • **Hammoud, Hassen
    Dearborn, MI 48124 (US)**

(74) Representative: **Bonsmann, Joachim Bernhard et
al
Bonsmann . Bonsmann . Frank
Patentanwälte
Kaldenkirchener Strasse 35 a
41063 Mönchengladbach (DE)**

(56) References cited:
**DE-A1- 10 355 888     US-A1- 2007 079 189
US-A1- 2011 066 486     US-A1- 2011 209 124**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Printed by Jouve, 75001 PARIS (FR)

**Description**

Product testing can be an expensive and time-consuming process. For example, complex products such as vehicles can require numerous tests during design, development, and other pre-production stages. Further, product tests may require the construction of complex and expensive prototypes. For example, vehicle prototypes may take weeks or months to build, and may cost hundreds of thousands of dollars. Certain tests may damage or even destroy a prototype, or at least certain components and/or systems of the prototype.

US 2011/0209124 A1 discloses a method, comprising receiving, in a computing device having a processor and a memory, a set of feature combinations for a product, which could be a vehicle, and a list of prototype control models; generating, in the computing device, a control model compatibility list that includes, for each pair of prototypes in the plurality of prototypes, an indication of whether the prototypes in the pair are compatible for tests; and performing, in the computing device, at least one of a heuristic and a mathematical optimization that utilizes at least the feature combinations and the control model compatibility list to generate a test schedule which minimizes test configurations for the product and which can include a list of platform exercises which could be constructed to simultaneously test subfeatures.

US 2011/0066486 A1 discloses a method for creating a macro plan and a micro plan for a project, wherein the micro plan may define how to run a particular test including the date(s) for the test.

US 2007/0079189 A1 discloses a method for generating test plans and identifying new test requirements for a new version of a product. The test plan document may include test scope, a test configuration, test duration and the like.

The object which is solved by the matters of the independent claims is to provide for mechanisms for test planning and scheduling for determining an optimal number of prototypes to build to complete a testing process, the configuration of the prototypes, and how to schedule tasks to maximize prototype usage.

Figure 1 is a block diagram of a test planning system;

Figure 2 provides a graphical representation of an exemplary iterative process for generating a list of possible prototypes;

Figure 3 illustrates an exemplary process flow for performing test planning;

Figure 4 illustrates an exemplary process flow for generating a control list; and

Figure 5 illustrates an exemplary process flow for creating a test schedule.

In the following figures, the same reference numbers will be used to illustrate the same components. It should be understood that various of the components set forth herein may be changed.

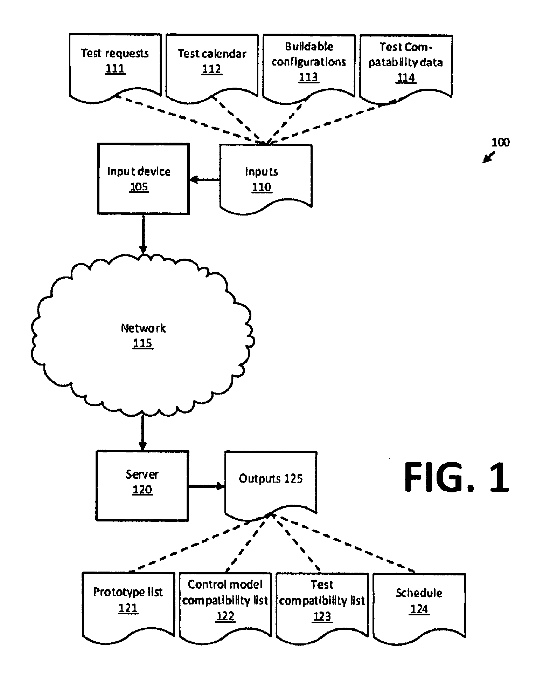

Figure 1 is a block diagram of a test planning system 100. The test planning system 100 advantageously optimizes a testing process. For example, the test planning system 100 generally minimizes a number of prototypes to be used and/or a number of days consumed in a testing process. Accordingly, the test planning system 100 advantageously provides reduced costs and consumption of resources.

The test planning system 100 includes one or more input devices 105 that generally provide inputs 110, via a network 115, to a server 120, which generates outputs 125. As described further below, inputs 110 may include test requests 111, test calendar 112, buildable configurations data 113, and/or test compatibility data 114. Further, outputs 125 may include a prototype list 121, a control model compatibility list 122, a test compatibility list 123, and a test schedule 124.

The input device 105 may be a client computer, e.g., a device that includes a graphical user interface, e.g., presented via a standard web browser or the like. Accordingly, the input device 105 may be any one of a number of computing devices, such as a laptop computer, a desktop computer, a handheld computing device such as a smart phone, a tablet computer, etc. Although one input device 105 is shown in Figure 1, it is to be understood that the system 100 may, and usually does, include multiple input devices 105. For example, in addition to a client computer, an input device may comprise, or may be connected to, a relational database and or some other file or data store providing certain of the inputs 110. In any event, the input device or devices 105 include processors and memories, the memories storing instructions executable by the processors, e.g., for carrying out operations described herein. Further, although the input device 105 and the server 120 are described herein as separate devices communicating via the network 115, implementations are possible, even likely, in which operations ascribed herein to the input device 105 and the server 120 are in fact performed on a single computing device.

The network 115 is generally a digital network such as a packet network and may include any one or more of a variety of known networks, such as a wide area network, a local area network, a wireless network, a cellular network, etc.

The server 120 may include one or more computing devices having a processor and a memory, the memory storing instructions executable by the processor for carrying out operations described herein. Further, implementations are possible in which operations described herein to input devices 105 and the server 120 are performed by single computing device.

Inputs 110 generally include a set of test requests 111, a test calendar 112, buildable configurations data 113, and test compatibility data 114.

Table 1 provides an example of test requests 111.

**Table 1**

| ID | Num Bus. Days | Bodystyle | Engine | Transmission | Destructive | Test Code |
|-----|------|--------|------|------|---|-----|
| 316 | 56 | Any | V6 | Any | 0 | XYZ |
| 199 | 58 | Any | V6 | Auto | 0 | XY1 |
| 293 | 84 | Coupe | I4 | Auto | 0 | XY3 |
| 342 | 5 | Any | I4 | Any | 1 | F03 |
| 197 | 83 | Coupe | V8 | Auto | 1 | QPR |
| 224 | 86 | Coupe | V8 | Auto | 0 | PDQ |
| 294 | 87 | Coupe | I4 | Auto | 0 | X11 |

Test requests 111 generally identify a set of tests requested for a products, including, for each test, a set of parameters for testing the product, in this example of Table 1, a vehicle. "ID" is a record identifier, generally an identifier for a particular test. "Number of business days" indicates a number of business days into a test process by which a particular test must be completed. "Body style" indicates a required body style for a prototype vehicle to be used during a particular test. "Engine" indicates an engine type, e.g., V6, etc. to be used during a particular test. "Transmission" indicates a transmission type required for a vehicle in a particular test. "Destructive" is a binary variable indicating whether a prototype will be destroyed during a particular test. "Test code" is a code for a particular type of test, e.g., a particular crash test, engine test, etc. It is to be understood that many other requests 111 could be provided for testing a product prototype, e.g., other test parameters including many various attributes to be included on a prototype to be tested, such as a vehicle prototype, could be specified. For example, and not by way of limitation, in the case of a vehicle prototype, wheel sizes, final drive ratios, emissions configurations, electrical system configurations, any deadlines for completing particular individual tests, etc. could be specified. In other words, columns shown in Table 1 could be removed and/or other columns could be added. Where a prototype is of a product other than a vehicle, columns in Table 1 would include different identifications of prototype attributes.

A test calendar 112 may include a beginning date and an ending date for a test process, i.e., for a test schedule. Further, a test calendar 112 may include data specifying individual days during a test schedule on which tests may be conducted. Table 2 provides an example of data that may be included in a test calendar 112; an actual test calendar 112 could likely have significantly more records because an actual test schedule could include more build dates.

**Table 2**

| Build Date | Day of Week | Is Holiday? | Day of Planning Period | Number of Vehicles to be Built |
|-----------|-----------|-----------|-----------|-----------|
| 4/25/2012 | Wednesday | | 1 | 1 |
| 4/26/2012 | Thursday | | 2 | 3 |
| 4/27/2012 | Friday | | 3 | 2 |
| 4/28/2012 | Saturday | | 4 | 0 |
| 4/29/2012 | Sunday | | 5 | 0 |
| 4/30/2012 | Monday | | 6 | 4 |
| 5/1/2012 | Tuesday | 1 | 7 | 4 |
| 5/2/2012 | Wednesday | | 8 | 3 |
| 5/3/2012 | Thursday | | 9 | 3 |

"Build date" is a date during a test schedule when prototypes, e.g., prototype vehicles, could be built. "Day of week" specifies the day of the week associated with the build date. "Is holiday?" specifies whether the build date is a holiday. "Day of planning period" sequentially numbers build dates in a test schedule. "Number of vehicles to be built" specifies a number of prototype vehicles for the test planned to be built on each build date. Other information could be included in a test calendar 112. For example, a column could be added to Table 2 to specify one or more "blackout periods," during which tests are not to be conducted, e.g., a "1" in the column indicating that the date falls within a blackout period. Further, although not shown in Table 2, test calendar 112 generally further includes a test end date. A test duration may then be determined according to a number of days between a first build date indicated in the test calendar 112 and the test end date.

Buildable configurations data 113 specifies possible configurations of features in prototypes that will be available during a test process. Buildable configurations data 113 is sometimes presented in the form of what may be referred to as control model table, i.e., a table that lists various product attributes that can be combined in a particular product model, e.g., a product prototype. Thus, buildable configurations data 113 may be a list of control models, i.e., a list of possible attribute combinations, i.e., buildable configurations, that constitute a definition of a prototype that may be available for testing.

Table 3 provides an example of buildable configurations 113.

**Table 3**

| Engine | Trans. | Body style |
|--------|--------|------------|
| I4 | Auto | Conv |
| I4 | Auto | Coupe |
| I4 | Manual | Conv |
| I4 | Manual | Coupe |
| V6 | Auto | Conv |
| V6 | Auto | Coupe |
| V6 | Manual | Conv |
| V6 | Manual | Coupe |
| V8 | Auto | Conv |
| V8 | Auto | Coupe |
| V8 | Manual | Conv |
| V8 | Manual | Coupe |

In Table 3, "Engine" refers to a vehicle engine type, "Trans." refers to a vehicle transmission type, and "Body style" refers to a vehicle body style, all possible attributes or features of a prototype vehicle that may be available for a test. Columns could be added to and/or removed from Table 3, or entirely other attributes could be specified, e.g., in cases where a prototype was for a product other than a vehicle.

Further, although Table 3 illustrates 12 combinations of three attributes, i.e., in Table 3 every possible combination of attributes is identified as a buildable configuration, note that, for many prototypes, certain attribute configurations may not be buildable. For example, with reference to Table 3, is conceivable that a V8 engine with a manual transmission and coupe body style, while a possible combination of possible vehicle attributes, might not actually be a buildable configuration of a vehicle prototype. In such a case, the record indicating a V8 engine, manual transmission, and coupe body style would be omitted from buildable configurations data 113, e.g., would not be shown in Table 3.

Test compatibility data 114 is generally a matrix or chart with the tests specified in test requests 111 listed in row and columns of the chart so as to specify the compatibility of tests with one another. Possibilities for test compatibility for any two tests are generally that tests may be performed on a same prototype in any order, tests may be performed on a same prototype but a particular order is required, or tests cannot be performed on the same prototype. In one implementation, test compatibility data 114 is a matrix of vehicle crash test compatibility. For example, different crash tests may affect different parts of a vehicle, and therefore may be able to be performed on a same prototype vehicle if performed in a certain order. Implementations are possible in which all tests are compatible with one another, in which event test compatibility data could be omitted from the system 100.

Table 4 provides an example of test compatibility data 114.

**Table 4**

| TEST | XYZ | XY1 | XY3 | F03 | QPR | PDQ |
|------|-----|-----|-----|-----|-----|-----|
| XYZ | 1 | -- | -- | -- | -- | -- |
| XY1 | 1 | 3 | -- | -- | -- | -- |
| XY3 | 3 | 3 | 3 | -- | -- | -- |
| F03 | 3 | 3 | 3 | 3 | -- | -- |
| QPR | 3 | 0 | 3 | 3 | 3 | -- |
| PDQ | 2 | 2 | 2 | 0 | 3 | 3 |

In Table 4, a "0" in a cell of the matrix means that tests specified at the intersection denoted by that cell can be performed on the same prototype, e.g., a vehicle, in any particular order. A "1" means that the two specified tests can be performed on a same vehicle, but that the test specified in the matrix's row heading must be performed before the test specified in the matrix's column heading. A "2" means that the two specified tests can be performed on a same vehicle, but that the test specified in the matrix's column heading must be performed before the test specified in the matrix's row heading. A "3" means that the two specified tests cannot be performed on a same vehicle. Note that the data 114 can indicate whether a particular test can be performed twice on the same vehicle.

OUTPUTS

The server 120 generally includes instructions for generating outputs 125. Such instructions generally include instructions for generating output data 125 including a prototype list 121, a compatibility list 123, and a test schedule 124. It should be understood that "outputs" as used herein may refer to system generated, displayed, stored, and/or computed data, and does not necessarily, but may, refer to data that is displayed or otherwise provided to a user.

A prototype list 121, in one implementation referred to as a "vehicle list," is a list of potentially buildable prototypes. Prototype list 121 may be generated from test calendar 112, e.g., for every prototype build indicated in test calendar 112, a prototype p is added to the prototype list 121. Each prototype in the prototype list 121 is associated with the build date that may be stored as an attribute of the prototype, e.g., one of the dates specified in the calendar 112; thus for each prototype in the prototype list 121, a capacity may be assigned and may further or alternatively be stored as an attribute of the prototype. In this context, "capacity" is defined as a number of days that the prototype is available for testing. Accordingly, prototype capacity, or at least a prototype's initial capacity, may be determined according to a number of days between a prototype's build date and the test end date included in the test calendar 112.

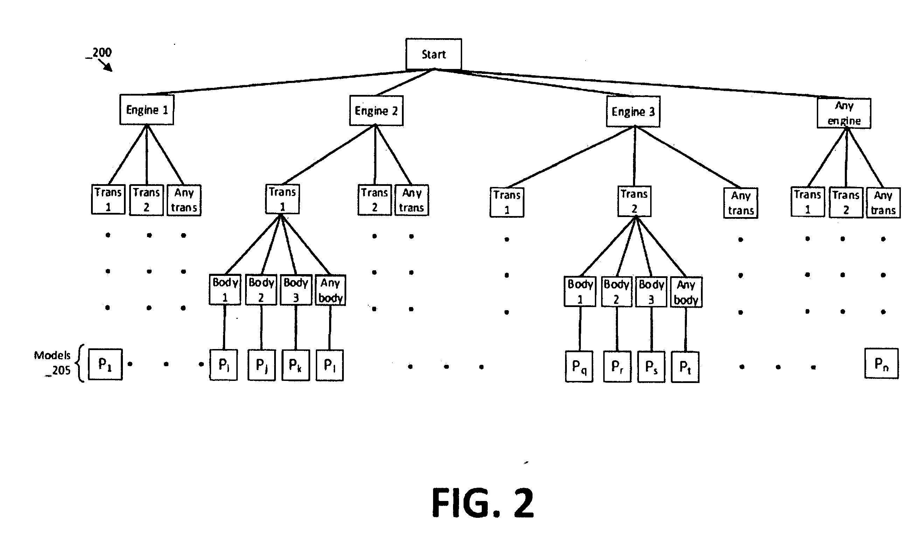

Output data 125 further includes a control model compatibility list 122. The list 122 may be a matrix, and in general describes general compatibility relationships between prototype control models. A prototype control model is simply a definition of a prototype having one or more specified attributes based on buildable configurations 113. For example, Table 3, in an example where prototype vehicles are to be tested, illustrates a subset of 12 of the n configurations in the tree 200 in Figure 2. These 12 configurations are possible combinations of engine types, transmission types, and body styles, based on buildable configurations 113. Producing a prototype for every buildable combination possible from buildable configurations 113 would result in a set of prototype models 205, as shown in Figure 2. However, a test record in test requests 111 may specify that a prototype used in the test have a particular type of one attribute, while leaving unspecified types of other attributes. For example, a vehicle test could specify a first engine type, but not specify transmission types body style types, or any other attribute. In this case, a prototype having any transmission type and any body style type would be compatible with the test, so long as the first engine type was included in the prototype. Likewise, if a test specified a second engine type and a first transmission type, a prototype having any body type would be compatible with the test, so long as the second engine type and the first transmission type were included in the test.

Accordingly, the control model compatibility list 122 is constructed such that two tests $t_i$, $t_j$ are indicated to be compatible where the two tests could use a same prototype. As illustrated by Figure 2, two tests may be able to use a same prototype because the tests call for prototypes having identical attributes, but moreover, two tests may be able to use a same prototype because specifications of the two tests permit some variation in a prototype attributes. In terms of the tree 200 shown in Figure 2, this is illustrated in that a prototype indicated by a first box on the tree 200 would be compatible for a test calling for a prototype indicated by a second box on the tree, so long as the second box could be reached from the first box by traversing the tree directly up or down. Thus, the control model compatibility list 122 could be constructed by determining whether particular tests $t_i$, $t_j$ required prototypes having what may be referred to as a "vertical" relationship. The control model compatibility list 122 could be a list or other data structure including a set of binary variables $c_{ti,tj}$, the variables having a value of "1" to indicate compatibility, or "0" to indicate incompatibility.

Although the control model compatibility list 122 is described herein as an output 125, it could alternatively be included in inputs 110. For example, a user could provide a table or other input identifying whether control models were compatible with one another. Output data 125 further includes a test compatibility list 123. Whereas the control model compatibility list 122 provides a determination of whether tests are compatible in terms of prototype build requirements, the test compatibility list 123 requires as a threshold that tests are compatible in terms of prototype build requirements, e.g., that $c_{ti,tj}$, = 1, but also considers other restrictions, such as may be imposed by test compatibility data 114, discussed above. For example, the compatibility list 123 may indicate whether, based on system inputs 110, including the test compatibility data 114, two tests $t_i$, $t_j$ can be performed on a single physical prototype.

Note that test compatibility is unidirectional. That is, performing a test $t_i$, and then a test $t_j$ on a particular prototype $p_i$ may be compatible, whereas performing the test $t_j$ and then the test $t_i$ is not. For example, a test $t_j$ may result in destruction of a prototype $p_i$. In this case, the test $t_j$ could be performed after the test $t_i$ but not before it.

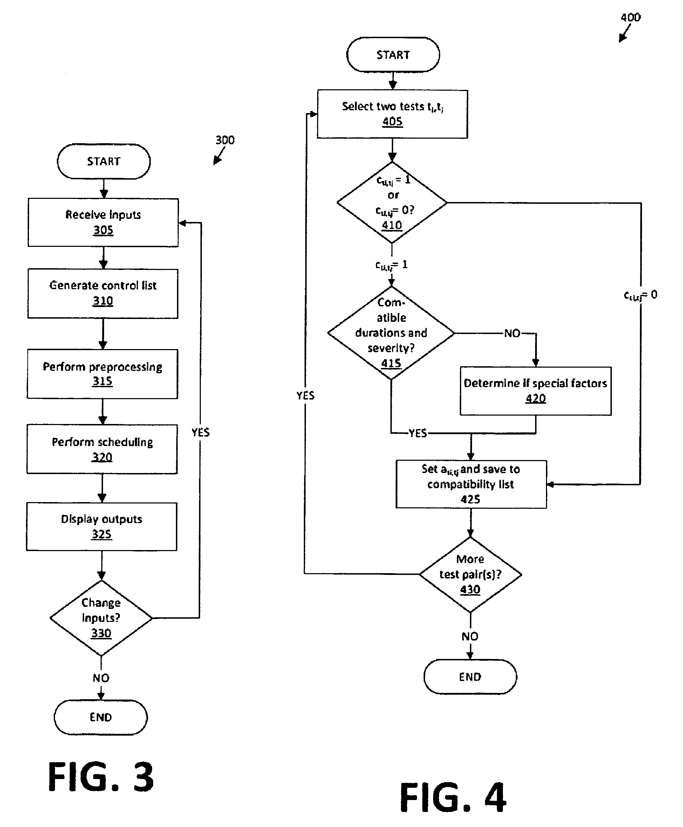

The compatibility list 123 is generally computed according to test request data 111, test calendar 112, test compatibility data 114, prototype list, and/or control model compatibility list 122. Figure 4, discussed further below, illustrates an exemplary process 400 for generating a test compatibility list 123.

Output data 125 generally further includes a test schedule 124. In general, a test schedule 124 specifies a schedule for building and testing prototypes, and is based on inputs 110, as well as prototype list 121 and compatibility list 123. That is, each record in a test schedule 124 generally corresponds to a particular prototype, e.g., a prototype vehicle. A portion of an exemplary test schedule 124, i.e., the first 10 days of the exemplary test schedule, is shown below in Table 5.

**Table 5**

| Bld Fin Day | ID Nums of Tests Assgd | Num Days Req. per ID | Total Num Days Req. | Num Bus. Days Rem. | Num Unused Bus. Days | Num Sats. | Num Suns | Num Holidays | Body | Eng | Trans |
|---|---|---|---|---|---|---|---|---|---|---|---|
| 1 | 16 | 103 | 103 | 98 | 0 | 5 | 0 | 0 | Conv | V8 | Manual |
| 2 | 15 | 103 | 103 | 97 | 0 | 6 | 0 | 0 | Coupe | I4 | Auto |
| 2 | 29 | 93 | 93 | 97 | 4 | 0 | 0 | 0 | Any | V8 | Manual |
| 2 | 149 & 390 | 10 & 87 | 97 | 97 | 0 | 0 | 0 | 0 | Any | I4 | Any |
| 3 | 375 & 381 & 398 | 4 & 87 & 5 | 96 | 96 | 0 | 0 | 0 | 0 | Any | I4 | Any |
| 3 | 110 & 294 & 404 | 3 & 87 & 5 | 95 | 96 | 1 | 0 | 0 | 0 | Coupe | I4 | Auto |
| 6 | 306 & 346 | 86 &5 | 91 | 95 | 4 | 0 | 0 | 0 | Coupe | I4 | Manual |
| 6 | 224 & 254 | 86 & 5 | 91 | 95 | 4 | 0 | 0 | 0 | Coupe | V8 | Auto |
| 6 | 73 & 383 | 10 & 85 | 95 | 95 | 0 | 0 | 0 | 0 | Any | I4 | Any |
| 6 | 102 & 380 | 10 & 85 | 95 | 95 | 0 | 0 | 0 | 0 | Coupe | I4 | Auto |
| 7 | 230 & 276 | 85 & 5 | 90 | 94 | 4 | 0 | 0 | 0 | Coupe | V8 | Manual |
| 7 | 141 & 196 | 5 & 85 | 90 | 94 | 4 | 0 | 0 | 0 | Any | I4 | Auto |

(continued)

| Bld Fin Day | ID Nums of Tests Assgd | Num Days Req. per ID | Total Num Days Req. | Num Bus. Days Rem. | Num Unused Bus. Days | Num Sats. | Num Suns | Num Holidays | Body | Eng | Trans |
|---|---|---|---|---|---|---|---|---|---|---|---|
| 7 | 101 & 382 | 10 & 84 | 94 | 94 | 0 | 0 | 0 | 0 | Any | I4 | Auto |
| 7 | 260 & 377 | 10 & 84 | 94 | 94 | 0 | 0 | 0 | 0 | Any | I4 | Manual |
| 8 | 273 & 293 | 5 & 84 | 89 | 93 | 4 | 0 | 0 | 0 | Coupe | I4 | Auto |
| 8 | 175 & 201 | 10 & 84 | 94 | 93 | 0 | 1 | 0 | 0 | Any | V8 | Auto |
| 8 | 103 & 379 | 10 & 83 | 93 | 93 | 0 | 0 | 0 | 0 | Coupe | I4 | Manual |
| 9 | 97 & 298 | 5 & 83 | 88 | 92 | 4 | 0 | 0 | 0 | Coupe | I4 | Auto |
| 9 | 39 & 223 & 277 | 3 & 83 & 5 | 91 | 92 | 1 | 0 | 0 | 0 | Coupe | V8 | Auto |
| 9 | 35 & 105 & 197 | 5 & 3 & 83 | 91 | 92 | 1 | 0 | 0 | 0 | Coupe | V8 | Auto |
| 10 | 386 | 82 | 82 | 91 | 9 | 0 | 0 | 0 | Any | I4 | Any |
| 10 | 272 & 296 | 5&82 | 87 | 91 | 4 | 0 | 0 | 0 | Coupe | I4 | Manual |
| 10 | 107 & 232 & 262 | 3 & 82 & 5 | 90 | 91 | 1 | 0 | 0 | 0 | Coupe | V8 | Manual |
| 10 | 142 & 388 | 10 & 81 | 91 | 91 | 0 | 0 | 0 | 0 | Any | I4 | Any |

The leftmost column of Table 5 represents a "Build Finish Day," sometimes referred to as a "Build Completion Day." The Build Finish Day is a day in a testing period on which a prototype is completed and ready for assigned tests.

The next column, "ID numbers of tests assigned," identifies, by a test identification number, the test or tests to be performed on a prototype vehicle completed on the Build Finish Day indicated in the leftmost column of table 5.

The next column, "number of days required per test ID," identifies a number of calendar days required to complete the test or tests whose identification numbers are indicated.

The next column, "total number of days required," represents a total number of calendar days required to perform the test or tests indicated in the "ID numbers of tests assigned" column. As can be seen, this column displays a sum of the numbers indicated in the previous column, i.e., a number of days required for each individual test is summed to provide a total number of days required for tests on a prototype vehicle.

The next column, "number of business days remaining," indicates a number of business days remaining in a test schedule. In the example of Table 5, a 99 business day test schedule is planned, and therefore, on Build Finish Day 1, 98 business days remain. Note that, in some cases, the number of business days remaining is less than the total number of days required. In these cases, the next column, "number of unused business days," is zero, and the following three columns, "number of Saturdays," "number of Sundays," and "number of holidays," may have positive values, because it is necessary to perform tests on non-business days.

The last three columns in Table 5 describe a configuration of a prototype build used for the indicated tests. For example, for the tests represented in Table 5, a build configuration includes a vehicle body type, an engine type, and a transmission type.

PROCESSES

Figure 3 illustrates an exemplary process 300 for generating a test schedule 124. The process 300 begins in a step 305, in which one or more input devices 105 provide inputs 110 to the server 120. For example, a graphical user interface (GUI) or the like may be provided, e.g., in a web browser, in an application such as Microsoft Excel, etc., that allows a user to input and/or upload test requests 111, test calendar 112, buildable configurations 113, and/or compatibility data 114. Further, one or more of the inputs 110 could be provided to the server 120 in a file or table retrieved from a data store.

Generally, in an exemplary implementation, to facilitate the process 300, the server 120 includes instructions for creating a test request object for each test of that has been requested, e.g., each record in test requests 111. The process 300 may also include creation of a data structure, such as a list, that includes each of these test objects, the list sometimes being referred to as a "request list."

Next, in a step 310, the server 120 generates a compatibility list 123. An exemplary process for generating a compatibility list 123 is discussed in detail below with respect to Figure 4.

Next, in a step 315, any required or desired preprocessing may be performed. For example, one or more test objects from test requests 111 may be designated for exclusion from the scheduling processor for inclusion on a different schedule, or for some other reason may be removed from the request list. Similarly, the request list may be partitioned according to priorities, e.g., high, normal, low, etc., assigned to test objects based on designations in test requests 111. In other words, it may be desirable to generate sub-schedules for different partitions of the request list, e.g., tests of different priorities.

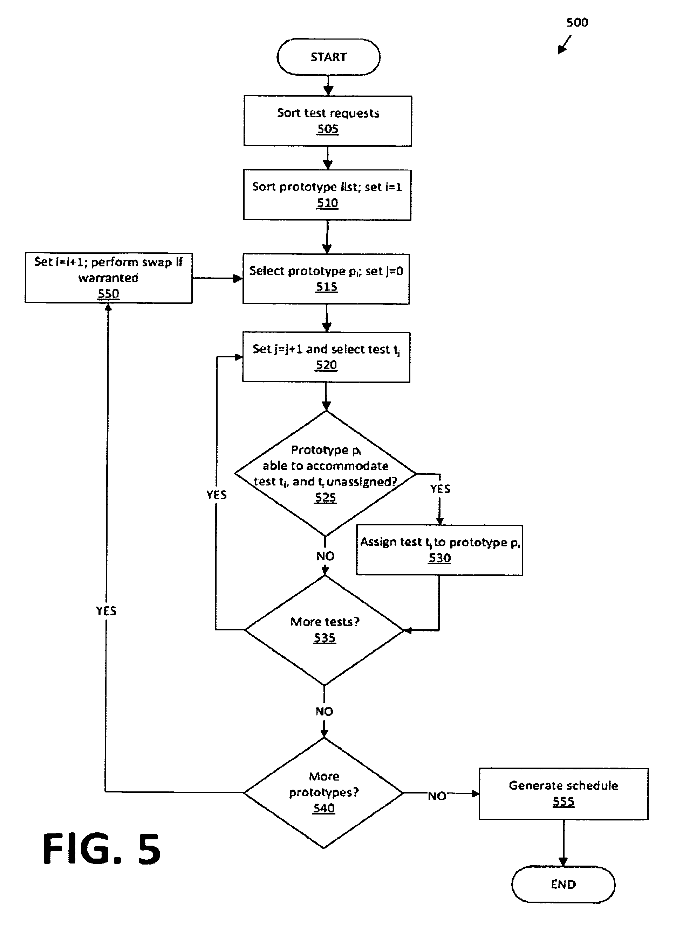

Next, in a step 320, a test schedule 124 is generated, e.g., as described below with respect to Figure 5. In cases where a request list has been partitioned, the respective partitions of the request list may be processed separately, and a test schedule generated from a concatenation of test schedules generated from the partitions of the request list. For example, generated test schedules could be concatenated in an order of priority, e.g., a generated test schedule based on a high priority partition of the test list could be placed on a final test schedule ahead of a generated test schedule based on a lower priority partition of the request list. Further, as discussed below, a test schedule 124 is generated according to some optimization process, but different optimizations are possible. Accordingly, different optimizations could be used on different partitions of a request list.

Next, in a step 325, outputs, e.g., the test schedule 124, are displayed, e.g., on a screen of input device 105.

Next, in a step 330, the process 300 determines whether a request to modify inputs 110 has been received. For example, an interface may be provided on input device 105 for changing test requests 111 or other parameters. Thus, a test scheduling application may provide "what if" analysis and the like. If inputs 110 are to be modified, the process 300 returns to step 305. Otherwise, the process 300 ends.

Figure 4, discussed further below, illustrates an exemplary process 400 for generating a test compatibility list 123. For example, the process 400 may be executed according to instructions stored in a computing device such as server 120.

The process 400 begins in a step 405, in which a test pair, e.g., tests $t_i$, $t_j$ in a set of tests T, such as may be found in test requests 111, are selected for evaluation.

Next, in a step 410, control model compatibility list 122 is consulted to determine whether the two tests in the test pair are compatible in terms of prototype specifications, e.g., buildable configurations 113, such as those listed in Table 3. For example, it may be determined whether, for the test pair, the value $c_{ti,tj}$ is zero or one. If the two tests are compatible, then step 415 is executed next. If not, the process 400 proceeds to step 430.

In a step 415, is determined whether the two tests $t_i$, $t_j$ are of compatible durations and severity. Determining whether durations are compatible includes determining whether the time required for each test $t_i$, $t_j$ will allow each test to be completed within the overall time allotted for testing according to the test calendar 112. For example, if the overall time allotted for testing is 100 days, and a first test requires 60 days, and a second test requires 50 days, then the two tests are not compatible from a timing perspective. Further, as discussed below with respect to Figure 5, certain tests may be compatible with respect to certain prototypes, and not others, i.e., some prototypes may have enough capacity for two tests and a test pair, where others may not.

For two tests $t_i$, $t_j$ to be of compatible severity means that severity levels of each test will allow both tests to be conducted on a single prototype. For example, as illustrated in Table 1, test requests 111 may specify a severity level for a test; in the example of Table 1, the "Destructive " variable is a binary variable indicating whether a vehicle is destroyed by a test. However, other severity levels are possible, e.g., "light," "medium," and "heavy." In general, tests having greater severity levels cannot be conducted before tests having wider severity levels. Further, tests having certain severity levels, e.g., where Destructive = 1, may foreclose any subsequent tests, regardless of the subsequent test's severity level, from being conducted. As noted above, test compatibility is generally not bidirectional at least in part because a test of destructive severity may be able to follow, but not precede, a test of lesser severity.

If the tests are not of both compatible durations and severity, then step 420 is executed next. If the two tests are of compatible durations and severity, then the process 400 proceeds to step 425.

In a step 420, which may be executed if there is the possibility of special factors existing that may allow the tests $t_i$, $t_j$ to be compatible even when other determinations, e.g., the determinations of steps 410-415 have determined that the tests are not compatible, it is determined whether such special factors in fact exist with respect to the tests $t_i$, $t_j$, and, if so, whether the tests are in fact compatible. For example, if two tests have been determined to be of incompatible durations, it may be possible that at least portions of the tests can be conducted at the same time. Further, as may be indicated in test compatibility data 114, tests that are otherwise incompatible, e.g., that would otherwise have conflicting severity levels, may nonetheless be conducted on a same prototype. For example, two tests may have "Destructive " severity levels, yet be compatible. For example, a low-speed left-side front crash test may be performed on a vehicle prototype before a right-side pole crash test, although such tests could not be performed in a reverse order. In any case, the determination of step 420 may override determinations of steps 410-415 that would otherwise provide the result that two tests $t_i$, $t_j$ are incompatible.

Step 425 is executed following either step 415 or step 420. In step 430, a value indicating whether the two tests $t_i$, $t_j$ identified in step 405 are compatible, e.g., a binary variable $a_{ti,tj}$ is set to 0 or 1. The value is then saved to the test compatibility list 123. Next, in a step 430, it is determined whether any additional test pairs $t_i$, $t_j$ remain to be evaluated. If so, the process 400 returns to step 405. Otherwise, the process 400 ends.

Figure 5 illustrates an exemplary process 500 for creating a test schedule 124. For example, the process 500 may be executed according to instructions stored in a memory of the server 120. The process 500 used in an exemplary implementation disclosed herein uses elements of a first-fit-decreasing (FFD) process and a heuristic swap process.

The process 500 begins in a step 505, in which test requests 111 are sorted in decreasing order of test durations, i.e., a list of test requests 111 begins with the longest test or tests and ends with the shortest test or tests.

Next, in a step 510, the prototype list 121 is sorted in decreasing order of prototype capacity, i.e., a prototype or prototypes having the most capacity are at the beginning of the resulting list of prototypes, which ends with a prototype or prototypes having the least capacity. Further, a prototype counter variable may be initialized; for example, as shown in Figure 5, a variable i=1 may be set in step 510 (i is used to specify an index to the prototype list 121, and therefore setting the initial value of i to 1 assumes that the first value in the prototype list 121 index is 1)

Next, in a step 515, a prototype $p_i$ is selected from the top of the sorted prototype list 121. Further, a test counter variable may be initialized; for example, as shown in Figure 5, a variable j=0 may be set in step 505 (because j will be incremented in the next step, this assumes that the index to the sorted list of test requests 111, which the variable j is used to access, begins at an index 1).

Next, in a step 520, the value j is incremented a test $t_j$ is selected from the top of the sorted test requests 111.

Next, in a step 525, it is determined whether $t_j$ has not already been assigned to a prototype and whether the selected prototype $p_i$ is able to accommodate the selected test $t_j$, i.e., the prototype has adequate capacity for the test, any tests already assigned to the prototype are compatible with the candidate test, e.g., according to test compatibility list 123, and whether there exists a feasible sequence for performing all tests assigned to the vehicle, including the candidate test. That is, there must be time to perform all tests and all tests must be able to be performed in the assigned order. If the selected prototype is able to accommodate the selected test and the test has not already been assigned, then step 530 is executed next. Otherwise, step 535 is executed next.

In step 530, the test $t_j$ is assigned to the prototype $p_i$ in a data structure, sometimes referred to as a "prototype assignment list," stored in a memory of the server 120.

In step 535, which may follow step 525, it is determined whether further tests in the sorted test requests 111 remain to be processed for the current prototype $p_i$. If so, the process 500 returns to step 520. Otherwise, the process 500 proceeds to step 540.

In step 540, it is determined whether further prototypes remain to be processed in the sorted prototype list 121. If so, the process 500 proceeds to a step 550. Otherwise, step 555 is executed next.

Next, in step 550, the variable i is incremented. Then, the prototype assignment list is searched to determine whether there exists a second prototype with less capacity than the current prototype, but nonetheless with sufficient capacity for all tests assigned to the current prototype. If such second prototype is found, it is swapped in the prototype assignment list for the current prototype, and the current prototype once again becomes available in the prototype assignment list at position i. Thus, the system 100 includes mechanisms for minimizing the number of prototypes included in a test schedule. Following step 550, the process 500 returns to step 515.

In step 555, which may follow step 540, a test schedule 124 is generated. Table 5, as discussed above, provides an example of a test schedule 124, providing a schedule for testing vehicle prototypes. With reference to the process 500, fields included in Table 5 may be generated as follows.

"Build Finish Day," as discussed above, a day in a testing period on which a vehicle prototype is completed and ready for assigned tests. The Build Finish Day is an attribute of a vehicle prototype, generally used for determining prototype capacity discussed above. A Build Finish Day may accordingly be included as output in the test schedule 124.

"ID numbers of tests assigned" includes identifiers for tests assigned to a prototype vehicle represented by a record in the test schedule 124, e.g., tests assigned as described above with respects to steps 530 and/or 550 in the process 500.

"Number of days required per test ID" may be populated by the process 500 reproducing a number of days required to complete the test or tests identified in the "ID numbers of tests assigned" column.

"Total number of days required," as discussed above, may be computed by the process 500 as a sum of the numbers indicated in the previous column.

"Number of business days remaining," may be computed by the process 500 as a number of business days remaining in a test schedule, and "number of unused business days" may be computed by subtracting from the total number of days in a test schedule the number of business days remaining.

Where the number of unused business days is less than zero, the process 500 may include rules for assigning tests to Saturdays, Sundays, and/or holidays, in which case, as discussed above, "number of Saturdays," "number of Sundays," and "number of holidays," may have positive values, because it is necessary to perform tests on non-business days.

Remaining fields in a test schedule 124 may be populated by the process 500 to include, as discussed above, attributes of a prototype build used for the indicated tests.

Following step 555, the process 500 ends.

It is to be understood that alternatives to the process 500 could be used to perform test scheduling. In general, the test scheduling problem is an optimization that seeks to minimize a number of prototypes needed to complete a test schedule 124. This optimization could be performed in a number of different ways. For example, although computationally intractable in certain cases, in some cases this optimization could be solved as an integer programming problem. An exemplary integer programming problem is as follows.

The exemplary integer programming problem, assuming that testing of prototype vehicles is being scheduled, has the following parameters:

- V is the set of potentially buildable prototype vehicles;
- v is a single prototype vehicle;
- $f_v$ is the number of days that a prototype vehicle v is available for tests;
- T is the set of tests requested;
- t is a single test;
- $c_{t1,t2,v}$ is a binary variable indicating whether tests $t_1$ and $t_2$ are compatible on vehicle v (1 indicating compatibility, and 0 indicating incompatibility);
- $d_t$ is the number of days required to perform test t.

Decision variables, to which values may be assigned for determining a test schedule 124, are defined as follows:

- $x_{t,v}$ is a binary variable indicating whether a test t is assigned to a prototype vehicle v (1 indicating that the test is assigned, and 0 indicating that it is not);
- $z_v$ is a binary variable indicating whether a prototype vehicle v is used (1 indicating that the vehicle is used; 0 indicating that it is not used).

Accordingly, the integer programming problem may present the following objective function:

$$Minimize \sum_{v \in V} z_v,$$

subject to satisfying the following constraints:

- each test t must be assigned to exactly one prototype vehicle, i.e.,

$$Minimize \sum_{v \in V} x_{t,v} = 1, \forall t \in T;$$

- a prototype vehicle must be built if a test is assigned to it, i.e.,

$$z_v \geq x_{t,v}, \forall t \in T, v \in V;$$

• incompatible tests cannot be assigned to the same prototype vehicle, i.e.,

$$x_{t_1,v} + x_{t_2,v} \leq 1, \forall (t_1, t_2) \in T \times T, v \in V: t_1 \neq t_2, c_{t_1,t_2,v} = 0;$$

• when a test is assigned to a prototype vehicle, sufficient testing days must be available with the vehicle, i.e.,

$$\sum_{t \in T} x_{t,v} \cdot d_t \leq f_v, \forall v \in V;$$

• and all binary variables must take either the value 0 or the value 1:

$$x_{t,v} \in \{0,1\}, \forall t \in T, v \in V.$$

Further, the foregoing objective function could be modified to consider other goals, e.g., minimizing overtime costs, schedule changes, or the required number of test days subject to a predetermined number of prototypes being available. Moreover, other constraints could be imposed, for example, precedence constraints between tests to ensure that one test is performed before another, or to prevent multiple destructive crash tests from being assigned to a same prototype vehicle. In any case, the solution to the above objective function would provide sets of values $z_v$ and $x_{t,v}$, which could then be used to identify prototype vehicles to be used in respective tests, and to generate a test schedule 124.

CONCLUSION

Computing devices such as those discussed herein generally each include instructions executable by one or more computing devices such as those listed above. Computer-executable instructions may be compiled or interpreted from computer programs created using a variety of programming languages and/or technologies, including, without limitation, and either alone or in combination, Java™, C, C++, Visual Basic, Java Script, Perl, HTML, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of computer-readable media. A file in a computing device is generally a collection of data stored on a computer readable medium, such as a storage medium, a random access memory, etc.

A computer-readable medium includes any medium that participates in providing data (e.g., instructions), which may be read by a computer. Such a medium may take many forms, including, but not limited to, non-volatile media, volatile media, etc. Non-volatile media include, for example, optical or magnetic disks and other persistent memory. Volatile media include dynamic random access memory (DRAM), which typically constitutes a main memory. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

With regard to the media, processes, systems, methods, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive. Many embodiments and applications other than the examples provided would be apparent to those of skill in the art upon reading the above description. The scope of the invention should be determined, not with reference to the above description, but should instead be determined with reference to the appended claims, along with the full scope of equivalents to which such claims are entitled. It is anticipated and intended that future developments will occur in the arts discussed herein, and that the disclosed systems and methods will be incorporated into such future embodiments.

In sum, it should be understood that the invention is capable of modification and variation and is limited only by the following claims.

All terms used in the claims are intended to be given their broadest reasonable constructions and their ordinary meanings as understood by those skilled in the art unless an explicit indication to the contrary in made herein. In particular, use of the singular articles such as "a," "the," "said," etc. should be read to recite one or more of the indicated elements unless a claim recites an explicit limitation to the contrary.

**Claims**

1. A method, comprising:

    receiving, in a computing device (120) having a processor and a memory, a set of test requests (111), a test calendar (112), a list of prototype control models, and test compatibility data (114), wherein

    each of the test requests (111) includes an identifier for one of a plurality of tests to be performed and one or more attributes required to be included in a prototype to be used in the one of the tests,

    the test calendar (112) includes a test duration and a list of build dates, each of the build dates associated with one of a plurality of prototypes to be available for testing on the respective build date,

    the list of prototype control models including a list of possible buildable configurations (113) of the prototypes, and the test compatibility data (114) indicating whether, for at least some pairs of tests in the set of test requests, each test in the pair can be performed on a single one of the prototypes;

    generating, in the computing device, a control model compatibility list (122) that includes, for each pair of prototypes in the plurality of prototypes, an indication of whether the prototypes in the pair are compatible for tests;

    generating, in the computing device, based at least on the control model compatibility list (122) and the test compatibility data (114), a test compatibility list (123) that specifies, for each pair of tests in the set of test requests, an indication of whether the tests in the pair of tests can each be performed on a single prototype;

    performing, in the computing device (120), at least one of a heuristic and a mathematical optimization that utilizes at least the test requests (111), the test calendar (112), the control model compatibility list (122) and the test compatibility list (123) to generate a test schedule (124) for building and testing prototypes.

2. The method of claim 1, wherein the indication of whether the tests in the pair of tests can each be performed on a single prototype depends at least in part on an order in which the tests in the pair of tests are to be performed.

3. The method of claim 1, wherein the optimization includes at least one of an integer programming problem, a first fit decreasing process, and a swap heuristic.

4. The method of claim 1, wherein the optimization considers, for at least some of the prototypes, an amount of time during a test period that the prototype is available for testing.

5. The method of claim 1, wherein generating the test schedule includes partitioning the test requests into two or more partitions, generating a test schedule for each of the partitions, and then concatenating the generated test schedules to provide a final test schedule.

6. The method of claim 1, wherein the prototypes are vehicle prototypes.

7. A system, comprising a computing device (120) having a processor and a memory, the memory storing instructions executable by the processor, the instructions including instructions for:

    receiving a set of test requests (111), a test calendar (112), a list of prototype control models, and test compatibility data (114), wherein

    each of the test requests (111) includes an identifier for one of a plurality of tests to be performed and one or more attributes required to be included in a prototype to be used in the one of the tests,

    the test calendar (112) includes a test duration and a list of build dates, each of the build dates associated with one of a plurality of prototypes to be available for testing on the respective build date,

    the list of prototype control models including a list of possible buildable configurations (113) of the prototypes, and the test compatibility data (114) indicating whether, for at least some pairs of tests in the set of test requests, each test in the pair can be performed on a single one of the prototypes;

    generating a control model compatibility list that (122) includes, for each pair of prototypes in the plurality of prototypes, an indication of whether the prototypes in the pair are compatible for tests;

generating, in the computing device, based at least on the control model compatibility list (122) and the test compatibility data (114), a test compatibility list (123) that specifies, for each pair of tests in the set of test requests, an indication of whether the tests in the pair of tests can each be performed on a single prototype;

performing at least one of a heuristic and a mathematical optimization that utilizes at least the test requests (111), the test calendar (112), the control model compatibility list (122) and the test compatibility list (123) to generate a test schedule (124) for building and testing prototypes.

8. The system of claim 7, wherein the indication of whether the tests in the pair of tests can each be performed on a single prototype depends at least in part on an order in which the tests in the pair of tests are to be performed.

9. The system of claim 7, wherein the optimization includes at least one of an integer programming problem, a first fit decreasing process, and a swap heuristic.

10. The system of claim 7, wherein the optimization considers, for at least some of the prototypes, an amount of time during a test period that the prototype is available for testing.

11. The system of claim 7, wherein generating the test schedule includes partitioning the test requests into two or more partitions, generating a test schedule for each of the partitions, and then concatenating the generated test schedules to provide a final test schedule.

12. The system of claim 7, further comprising a second computing device, the second computing device comprising a processor and a memory, the memory storing instructions executable by the processor, the instructions including instructions for providing at least one of the test requests, the test calendar, and the list of prototype control models to the computing device.

13. A non-transitory computer-readable medium having instructions embodied thereon that are executable by a computer processor, the instructions including instructions for:

receiving a set of test requests (111), a test calendar (112), a list of prototype control models, and test compatibility data (114), wherein

each of the test requests (111) includes an identifier for one of a plurality of tests to be performed and one or more attributes required to be included in a prototype to be used in the one of the tests,

the test calendar (112) includes a test duration and a list of build dates,

each of the build dates associated with one of a plurality of prototypes to be available for testing on the respective build date,

the list of prototype control models including a list of possible buildable configurations (113) of the prototypes, and

the test compatibility data (114) indicating whether, for at least some pairs of tests in the set of test requests, each test in the pair can be performed on a single one of the prototypes;

generating a control model compatibility list (122) that includes, for each pair of prototypes in the plurality of prototypes, an indication of whether the prototypes in the pair are compatible for tests;

generating, in the computer processor, based at least on the control model compatibility list (122) and the test compatibility data (114), a test compatibility list (123) that specifies, for each pair of tests in the set of test requests, an indication of whether the tests in the pair of tests can each be performed on a single prototype;

performing at least one of a heuristic and a mathematical optimization that utilizes at least the test requests (111), the test calendar (112), the control model compatibility list (122) and the test compatibility list (123) to generate a test schedule for building and testing prototypes.

14. The medium of claim 13, wherein the indication of whether the tests in the pair of tests can each be performed on a single prototype depends at least in part on an order in which the tests in the pair of tests are to be performed.

15. The medium of claim 13, wherein the optimization includes at least one of an integer programming problem, a first fit decreasing process, and a swap heuristic.

16. The medium of claim 13, wherein the optimization considers, for at least some of the prototypes, an amount of time during a test period that the prototype is available for testing.

17. The medium of claim 13, wherein generating the test schedule includes partitioning the test requests into two or more partitions, generating a test schedule for each of the partitions, and then concatenating the generated test schedules to provide a final test schedule.

**Patentansprüche**

1. Verfahren, umfassend:

    Empfangen, in einem Computergerät (120) mit einem Prozessor und einem Speicher, eines Satzes von Testanforderungen (111), eines Testkalenders (112), einer Liste von Prototypenkontrollmodellen und Testkompatibilitätsdaten (114), wobei
    jeder der Testanforderungen (111) einen Identifizierer für einen oder eine Mehrzahl durchzuführender Tests und ein oder mehrerer Attribute enthält, die in einem für einen der Tests zu verwendenden Prototyp enthalten sein müssen,
    der Testkalender (112) eine Testdauer und eine Liste von Erstellungsdaten aufweist, wobei jedes Erstellungsdatum mit einem aus der Mehrzahl von Prototypen verknüpft ist, wobei der Prototyp an dem jeweiligen Erstellungsdatum zum Test zur Verfügung steht,
    die Liste von Prototypenkontrollmodellen eine Liste möglicher erstellbarer Konfigurationen (113) der Prototypen aufweist, und
    die Testkompatibilitätsdaten (114) anzeigen, ob, zumindest für wenigstens einige Testpaare in dem Satz von Testanforderungen, jeder Test in dem Paar in einem einzelnen Prototyp ausgeführt werden kann,
    Generieren, in dem Computergerät, einer Kontrollmodellkompatibilitätsliste (122), die für jedes Paar von Prototypen aus der Mehrzahl von Prototypen eine Angabe enthält, ob die Prototypen in dem Paar für Tests kompatibel sind;
    Generieren, in dem Computergerät, einer Testkompatibilitätsliste (123) basierend auf wenigstens der Kontrollmodellkompatibilitätsliste (122) und der Testkompatibilitätsdaten (114), die für jedes Paar von Tests in dem Satz von Testanforderungen eine Angabe spezifiziert, ob die Tests in dem Paar von Tests jeweils auf einem einzelnen Prototyp ausgeführt werden können;
    Durchführen, in dem Computergerät (120), wenigstens einer Optimierung aus einer heuristischen und einer mathematischen Optimierung, die wenigstens die Testanforderungen (111), den Testkalender (112), die Kontrollmodellkompatibilitätsliste (122) und die Testkompatibilitätsliste (123) nutzt, um einen Testplan (124) zur Erstellung und zum Testen der Prototypen zu generieren.

2. Verfahren nach Anspruch 1, wobei die Angabe, ob Tests in dem Paar von Tests auf einem einzelnen Prototyp ausgeführt werden können, zumindest zum Teil von einer Reihenfolge abhängt, in der die Tests in dem Paar von Tests durchgeführt werden.

3. Verfahren nach Anspruch 1, wobei die Optimierung wenigstens ein Ganzzahl-Programmierproblem, einen abnehmenden First-Fit-Anpassungsprozess und eine Tauschheuristik aufweist.

4. Verfahren nach Anspruch 1, wobei die Optimierung für wenigstens einen Teil der Prototypen eine Zeitdauer während einer Testperiode berücksichtigt, in der der Prototyp zum Testen zur Verfügung steht.

5. Verfahren nach Anspruch 1, wobei die Generierung des Testplans eine Partitionierung der Testanforderungen in ein oder zwei Partitionen, ein Generieren eines Testplans für jede der Partitionen und dann ein Aneinanderfügen der generierten Testpläne zum Erhalt eines endgültigen Testplans aufweist.

6. Verfahren nach Anspruch 1, wobei die Prototypen Fahrzeugprototypen sind.

7. System, enthaltend ein Computergerät (120) mit einem Prozessor und einem Speicher, wobei der Speicher durch den Prozessor ausführbare Instruktionen speichert, wobei die Instruktionen Instruktionen enthalten zum:

    Empfangen eines Satzes von Testanforderungen (111), eines Testkalenders (112), einer Liste von Prototypenkontrollmodellen und Testkompatibilitätsdaten (114), wobei
    jeder der Testanforderungen (111) einen Identifizierer für einen oder eine Mehrzahl durchzuführender Tests und ein oder mehrerer Attribute enthält,
    die in einem für einen der Tests zu verwendenden Prototyp enthalten sein müssen,
    der Testkalender (112) eine Testdauer und eine Liste von Erstellungsdaten aufweist, wobei jedes Erstellungsdatum mit einem aus der Mehrzahl von Prototypen verknüpft ist, wobei der Prototyp an dem jeweiligen Erstellungsdatum zum Test zur Verfügung steht,

die Liste von Prototypenkontrollmodellen eine Liste möglicher erstellbarer Konfigurationen (113) der Prototypen aufweist, und

die Testkompatibilitätsdaten (114) anzeigen, ob, zumindest für wenigstens einige Testpaare in dem Satz von Testanforderungen, jeder Test in dem Paar in einem einzelnen Prototyp ausgeführt werden kann,

Generieren einer Kontrollmodellkompatibilitätsliste (122), die für jedes Paar von Prototypen aus der Mehrzahl von Prototypen eine Angabe enthält, ob die Prototypen in dem Paar für Tests kompatibel sind;

Generieren, in dem Computergerät, einer Testkompatibilitätsliste (123) basierend auf wenigstens der Kontrollmodellkompatibilitätsliste (122) und der Testkompatibilitätsdaten (114), die für jedes Paar von Tests in dem Satz von Testanforderungen eine Angabe spezifiziert, ob die Tests in dem Paar von Tests jeweils auf einem einzelnen Prototyp ausgeführt werden können;

Durchführen wenigstens einer Optimierung aus einer heuristischen und einer mathematischen Optimierung, die wenigstens die Testanforderungen (111), den Testkalender (112), die Kontrollmodellkompatibilitätsliste (122) und die Testkompatibilitätsliste (123) nutzt, um einen Testplan (124) zur Erstellung und zum Testen der Prototypen zu generieren.

8. System nach Anspruch 7, wobei die Angabe, ob Tests in dem Paar von Tests auf einem einzelnen Prototyp ausgeführt werden können, zumindest zum Teil von einer Reihenfolge abhängt, in der die Tests in dem Paar von Tests durchgeführt werden.

9. System nach Anspruch 7, wobei die Optimierung wenigstens ein Ganzzahl-Programmierproblem, einen abnehmenden First-Fit-Anpassungsprozess und eine Tauschheuristik aufweist.

10. System nach Anspruch 7, wobei die Optimierung für wenigstens einen Teil der Prototypen eine Zeitdauer während einer Testperiode berücksichtigt, in der der Prototyp zum Testen zur Verfügung steht.

11. System nach Anspruch 7, wobei die Generierung des Testplans eine Partitionierung der Testanforderungen in ein oder zwei Partitionen, ein Generieren eines Testplans für jede der Partitionen und dann ein Aneinanderfügen der generierten Testpläne zum Erhalt eines endgültigen Testplans aufweist.

12. System nach Anspruch 7, weiter enthaltend ein zweites Computergerät, wobei das zweite Computergerät einen Prozessor und einen Speicher aufweist, wobei der Speicher durch den Prozessor ausführbare Instruktionen speichert, wobei die Instruktionen wenigstens Instruktionen zur Bereitstellung wenigstens einer der Testanforderungen, des Testkalenders und der Liste von Prototypenkontrollmodellen an das Computergerät beinhalten.

13. Nichtflüchtiges computerlesbares Medium, das Instruktionen beinhaltet, die von einem Computerprozessor ausführbar sind, wobei die Instruktionen Instruktionen enthalten zum:

Empfangen eines Satzes von Testanforderungen (111), eines Testkalenders (112), einer Liste von Prototypenkontrollmodellen und Testkompatibilitätsdaten (114), wobei

jeder der Testanforderungen (111) einen Identifizierer für einen oder eine Mehrzahl durchzuführender Tests und ein oder mehrerer Attribute enthält,

die in einem für einen der Tests zu verwendenden Prototyp enthalten sein müssen,

der Testkalender (112) eine Testdauer und eine Liste von Erstellungsdaten aufweist, wobei jedes Erstellungsdatum mit einem aus der Mehrzahl von Prototypen verknüpft ist, wobei der Prototyp an dem jeweiligen Erstellungsdatum zum Test zur Verfügung steht,

die Liste von Prototypenkontrollmodellen eine Liste möglicher erstellbarer Konfigurationen (113) der Prototypen aufweist, und

die Testkompatibilitätsdaten (114) anzeigen, ob, zumindest für wenigstens einige Testpaare in dem Satz von Testanforderungen, jeder Test in dem Paar in einem einzelnen Prototyp ausgeführt werden kann,

Generieren einer Kontrollmodellkompatibilitätsliste (122), die für jedes Paar von Prototypen aus der Mehrzahl von Prototypen eine Angabe enthält, ob die Prototypen in dem Paar für Tests kompatibel sind;

Generieren, in dem Computerprozessor, einer Testkompatibilitätsliste (123) basierend auf wenigstens der Kontrollmodellkompatibilitätsliste (122) und

der Testkompatibilitätsdaten (114), die für jedes Paar von Tests in dem Satz von Testanforderungen eine Angabe spezifiziert, ob die Tests in dem Paar von Tests jeweils auf einem einzelnen Prototyp ausgeführt werden können;

Durchführen wenigstens einer Optimierung aus einer heuristischen und einer mathematischen Optimierung, die wenigstens die Testanforderungen (111), den Testkalender (112), die Kontrollmodellkompatibilitätsliste (122) und die Testkompatibilitätsliste (123) nutzt, um einen Testplan (124) zur Erstellung und zum Testen der Prototypen zu generieren.

14. Medium nach Anspruch 13, wobei die Angabe, ob Tests in dem Paar von Tests auf einem einzelnen Prototyp ausgeführt werden können, zumindest zum Teil von einer Reihenfolge abhängt, in der die Tests in dem Paar von Tests durchgeführt werden.

15. Medium nach Anspruch 13, wobei die Optimierung wenigstens ein Ganzzahl- Programmierproblem, einen abnehmenden First-Fit-Anpassungsprozess und eine Tauschheuristik aufweist.

16. Medium nach Anspruch 13, wobei die Optimierung für wenigstens einen Teil der Prototypen eine Zeitdauer während einer Testperiode berücksichtigt, in der der Prototyp zum Testen zur Verfügung steht.

17. Medium nach Anspruch 13, wobei die Generierung des Testplans eine Partitionierung der Testanforderungen in ein oder zwei Partitionen, ein Generieren eines Testplans für jede der Partitionen und dann ein Aneinanderfügen der generierten Testpläne zum Erhalt eines endgültigen Testplans aufweist.

**Revendications**

1. Une méthode comprenant:

la réception, dans un ordinateur (120) doté d'un processeur et d'une mémoire, d'un ensemble de demandes d'essai (111), d'un calendrier d'essais (112), d'une liste de modèles de contrôle de prototypes, et des données de compatibilité d'essais (114), dans laquelle
chacune des demandes d'essai (111) comprend un identifiant pour un essai de la série d'essais à effectuer et un ou plusieurs attributs devant être incorporés dans un prototype à utiliser dans un des essais,
le calendrier d'essais (112) comprenant une durée des essais et une liste de dates de réalisation, chacune des dates de réalisation se rapportant à un prototype d'une série de prototypes qui devront être disponibles pour des essais à la date de réalisation correspondante,
la liste de modèles de contrôle de prototypes comprenant une liste de configurations réalisables possibles (113) des prototypes, et
les données de compatibilité d'essais (114) indiquant si, tout au moins pour certaines paires d'essais de l'ensemble de demandes d'essais, chaque essai de la paire peut être effectué sur un des prototypes ;
la production, dans l'ordinateur, d'une liste de compatibilité de modèles de contrôle (122), comprenant, pour chaque paire de prototypes de la série de prototypes, une indication de la compatibilité éventuelle des prototypes de la paire pour des essais ;
la production, dans l'ordinateur, sur la base au moins d'une liste de compatibilité de modèles de contrôle (122) et des données de compatibilité d'essais (114), d'une liste de compatibilité d'essais (123) spécifiant, pour chaque paire d'essais de l'ensemble de demandes d'essais, une indication de la possibilité de l'exécution de chacun des essais, dans la paire d'essais, sur un prototype unique ;
l'exécution dans l'ordinateur (120) d'au moins une optimisation heuristique et une optimisation mathématique utilisant au moins les demandes d'essai (111), le calendrier d'essais (112), la liste de compatibilité de modèles de contrôle (122), et la liste de compatibilité d'essais (123) pour la production d'un programme d'essais (124) pour la réalisation et les essais de prototypes d'essai.

2. La méthode selon la revendication 1, l'indication de la possibilité de l'exécution de chacun des essais, dans la paire d'essais, sur un prototype unique étant tributaire, tout au moins en partie, d'un ordre dans lequel les essais de la paire d'essais doivent être exécutés.

3. La méthode selon la revendication 1, dans laquelle l'optimisation comprend au moins un problème de programmation en nombre entiers, un procédé First-Fit décroissant, et une heuristique de swap.

4. La méthode selon la revendication 1, dans laquelle l'optimisation évalue, pour au moins certains des prototypes, un laps de temps, au cours d'une période d'essai, pendant lequel le prototype est disponible pour des essais.

**5.** La méthode selon la revendication 1, dans laquelle la production du programme d'essai comprend le partitionnement des demandes d'essais et deux ou plusieurs partitions, la production d'un programme d'essais pour chacune des partitions, puis la concaténation des programmes d'essais produits pour la production d'un programme d'essais final.

**6.** La méthode selon la revendication 1, dans laquelle les prototypes sont des prototypes de véhicules automobiles.

**7.** Un système, comprenant un ordinateur (I20) doté d'un processeur et d'une mémoire, dans la mémoire étant stockées des instructions exécutables par le processeur, les instructions comprenant des instructions pour :

la réception d'un ensemble de demandes d'essai (111), d'un calendrier d'essais (112), d'une liste de modèles de contrôle de prototypes, et de données de compatibilité d'essais (114), dans laquelle
chacune des demandes d'essai (111) comprend un identifiant pour un essai de la série d'essais à effectuer et un ou plusieurs attributs devant être incorporés dans un prototype à utiliser dans un des essais,
le calendrier d'essais (112) comprenant une durée des essais et une liste de dates de réalisation, chacune des dates de réalisation se rapportant à un prototype d'une série de prototypes qui devront être disponibles pour des essais à la date de réalisation correspondante,
la liste de modèles de contrôle de prototypes comprenant une liste de configurations réalisables possibles (113) des prototypes, et
les données de compatibilité d'essais (114) indiquant si, tout au moins pour certaines paires d'essais dans l'ensemble de demandes d'essais, chaque essai de la paire peut être effectué sur un des prototypes ;
la production d'une liste de compatibilité de modèles de contrôle (122), comprenant, pour chaque paire de prototypes de la série de prototypes, une indication de la compatibilité éventuelle des prototypes de la paire pour des essais ;
la production, dans l'ordinateur, sur la base au moins d'une liste de compatibilité de modèles de contrôle (122) et des données de compatibilité d'essais (114), d'une liste de compatibilité d'essais (123) spécifiant, pour chaque paire d'essais de l'ensemble de demandes d'essais, une indication de la possibilité de l'exécution de chacun des essais, dans la paire d'essais, sur un prototype unique ;
l'exécution d'au moins une optimisation heuristique et une optimisation mathématique utilisant au moins les demandes d'essai (111), le calendrier d'essais (112), la liste de compatibilité de modèles de contrôle (122), et la liste de compatibilité d'essais (123) pour la production d'un programme d'essais (124) pour réaliser et tester des prototypes.

**8.** Le système selon la revendication 7, dans lequel l'indication de l'exécution éventuelle de chacun des essais de la paire d'essais sur un prototype unique est tributaire, tout au moins en partie, d'un ordre dans lequel les essais de la paire d'essais doivent être exécutés.

**9.** Le système selon la revendication 7, dans lequel l'optimisation comprend au moins un problème de programmation en nombre entiers, un procédé First-Fit décroissant, et une heuristique de swap.

**10.** Le système selon la revendication 7, dans lequel l'optimisation évalue, pour au moins certains des prototypes, un laps de temps, au cours période d'essai, pendant lequel le prototype est disponible pour des essais.

**11.** Le système selon la revendication 7, dans lequel la production du programme d'essai comprend le partitionnement des demandes d'essais et deux ou plusieurs partitions, la production d'un programme d'essais pour chacune des partitions, puis la concaténation des programmes d'essais produits pour la production d'un programme d'essais final.

**12.** Le système selon la revendication 7, comprenant en outre un deuxième ordinateur, le deuxième ordinateur étant doté d'un processeur et d'une mémoire, dans la mémoire étant stockées des instructions exécutables par le processeur, les instructions comprenant des instructions pour fournir à l'ordinateur au moins une des demandes d'essai, le calendrier des essais, et la liste des modèles de contrôle de prototype.

**13.** Un support non transitoire lisible par ordinateur, incorporant des instructions exécutables par un processeur d'ordinateur, comprenant des instructions pour :

recevoir un ensemble de demandes d'essais (111), un calendrier d'essais (112), une liste de modèles de contrôle de prototypes, et des données de compatibilité d'essais (114),
chacune des demandes d'essai (111) comprenant un identifiant pour un essai de la série d'essais à effectuer et un ou plusieurs attributs devant être incorporés dans un prototype à utiliser dans un des essais,

le calendrier d'essais (112) comprenant une durée des essais et une liste de dates de réalisation, chacune des dates de réalisation se rapportant à un prototype d'une série de prototypes qui devront être disponibles pour des essais à la date de réalisation correspondante,

la liste de modèles de contrôle de prototypes comprenant une liste de configurations réalisables possibles (113) des prototypes, et

les données de compatibilité d'essais (114) indiquant si, tout au moins pour certaines paires d'essais dans l'ensemble de demandes d'essais, chaque essai de la paire peut être effectué sur un des prototypes ;

la production d'une liste de compatibilité de modèles de contrôle (122), comprenant, pour chaque paire de prototypes de la série de prototypes, une indication de la compatibilité éventuelle des prototypes de la paire pour des essais ;

la production, dans l'ordinateur, sur la base au moins d'une liste de compatibilité de modèles de contrôle (122) et des données de compatibilité d'essais (114), d'une liste de compatibilité d'essais (123) spécifiant, pour chaque paire d'essais de l'ensemble de demandes d'essais, une indication de la possibilité éventuelle de l'exécution de chacun des essais de la paire d'essais sur un prototype unique ;

l'exécution d'au moins une optimisation heuristique et une optimisation mathématique utilisant au moins les demandes d'essai (111), le calendrier d'essais (112), la liste de compatibilité de modèles de contrôle (122), et la liste de compatibilité d'essais (123) pour la production d'un programme d'essais pour la réalisation et les essais de prototypes d'essai.

14. Le support selon la revendication 13, dans lequel l'indication de la possibilité de l'exécution de chacun des essais, dans la paire d'essais, sur un prototype unique étant tributaire, tout au moins en partie, d'un ordre dans lequel les essais de la paire d'essais doivent être exécutés.

15. Le support selon la revendication 13, dans laquelle l'optimisation comprend au moins un problème de programmation en nombre entiers, un procédé First-Fit décroissant, et une heuristique de swap.

16. Le support selon la revendication 13, dans laquelle l'optimisation évalue, pour au moins certains des prototypes, un laps de temps, au cours d'une période d'essai, pendant lequel le prototype est disponible pour des essais.

17. Le support selon la revendication 13, dans laquelle la production du programme d'essai comprend le partitionnement des demandes d'essais en deux ou plusieurs partitions, la production d'un programme d'essais pour chacune des partitions, puis la concaténation des programmes d'essais produits pour la production d'un programme d'essais final.

EP 2 765 518 B1

FIG. 1

FIG. 2

FIG. 3

*300*

START

Receive inputs
305

Generate control list
310

Perform preprocessing
315

Perform scheduling
320

Display outputs
325

Change inputs?
330

— YES

NO

END

FIG. 4

*400*

START

Select two tests $t_i, t_j$
405

$c_{ti,tj} = 1$ or $c_{ti,tj} = 0$?
410

$c_{ti,tj} = 0$

$c_{ti,tj} = 1$

Compatible durations and severity?
415

— NO —

Determine if special factors
420

YES

Set $a_{ti,tj}$ and save to compatibility list
425

More test pair(s)?
430

YES

NO

END

500

**FIG. 5**

START

Sort test requests
505

Sort prototype list; set i=1
510

Set i=i+1; perform swap if warranted
550

Select prototype $p_i$; set j=0
515

Set j=j+1 and select test $t_j$
520

Prototype $p_i$ able to accommodate test $t_j$, and $t_j$ unassigned?
525

YES

Assign test $t_j$ to prototype $p_i$
530

NO

More tests?
535

YES

NO

More prototypes?
540

NO

Generate schedule
555

YES

END

**EP 2 765 518 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110209124 A1
- US 20110066486 A1
- US 20070079189 A1